# EUROPEAN PATENT APPLICATION

(11) **EP 0 811 321 A2**
(43) Date of publication of application: **10.12.1997**
(21) Application number: 97303925.8
(22) Date of filing: 06.06.1997
(51) Int. Cl.: A01K 97/12

(54) **Bite detector**

(30) Priority: 06.06.1996 GB 9611793
(71) Applicant: REYNOLDS-HEPBURN LIMITED, Newcastle upon Tyne NE2 2AL (GB)
(72) Inventor: McRae, John Charles, Aberdeen AB10 7HZ (GB)
(74) Representative: Hamilton, Alistair

(57) **Abstract**

A bite detector for use in rod fishing comprises a movement detector for detecting movement of a fishing line, and an indicator for indicating such movement to a user. The bite detector has a tensioner to act on the line between the movement detector and the reel. The tensioner draws line through the movement detector in the event that tension in the line between the detector and the hook is reduced. The indicator gives a first signal in the event that the line moves in a first direction and a distinct second signal in the event that the line moves in the opposite direction. By means of that arrangement, a user is informed of the direction of line movement when a bite occurs.

## Description

The present invention relates to bite detectors for use in rod fishing.

In order to catch a fish successfully with a rod and line, an angler must strike at just the right moment after a fish has bitten upon a baited hook. If the strike is made too early, the hook may pull free. Too late, and the fish may have already taken the bait and swum off. The more information about the behaviour of the fish which is made available to an angler, the greater the likelihood of success.

It is known to provide an automatic bite detector to help an angler to detect a bite. Most generally, such detectors sense movement of the line as it is moved by a fish taking bait from a hook. Typically, some suitable device is provided to maintain the line under light tension, such that, if the fish swims towards the rod, the line is also caused to move. However, such detectors do not inform the angler of the direction of movement which is occurring.

It is an aim of the present invention to provide a fishing bite indicator which provides an angler with additional information, and which, in particular, can provide an indication of the direction in which the line is moving.

According to the invention, there is provided a fishing bite detector comprising a detector for detecting movement of a fishing line extending between a reel and a hook, and an indicator for indicating such movement to a user, the detector having a tensioner to act on the line between the detector and the reel, the tensioner operating to draw line through the detector in the event that tension in the line between the detector and the hook is reduced, wherein the detector gives a first signal in the event that the line moves in a first direction and a distinct second signal in the event that the line moves in the opposite direction.

By means of this arrangement, the detector will inform the angler if a fish swims towards the rod after having taken bait, with a signal distinct from that which will be issued of the fish swims away from the rod.

The tensioner may typically comprise a weighted arm which is supported by the line between the bite detector and the reel. The arm may be pivotally attached to the bite detector.

The indicator may serve to indicate detection of line movement by emission of sound, light, or both.

In examples in accordance with the last-preceding paragraph, direction of movement may be indicated by which one of a plurality of colours of light is emitted by the indicating means. Alternatively or additionally, the direction of movement may be indicated by which one of a plurality of patterns of light is displayed.

Additionally or alternatively to the examples of the last-preceding paragraph, the direction of movement may be indicated by emission of one of a plurality of distinguishable sounds.

Movement of the line may cause rotary movement of a first rotor of the detector. Such rotary movement may be transmitted to a second rotor through an impermeable membrane, disposed to provide a sealed housing for electronic components of the detector. Each rotor may carry permanent magnets, rotary movement being transmitted through attractive or repulsive forces acting between the magnets.

Embodiments of the invention will now be described in detail, by way of example, with reference to the accompanying drawings in which:
Figure 1 is a side view of a detector embodying the invention in use;
Figure 2 is a cross sectional view of the detector of Figure 1 approximately along the axis of a fishing line with which it is being used;
Figure 3 is a schematic diagram of internal components of the detector of Figure 1;
Figure 4 is a circuit diagram of the detector of Figures 1 to 3; and
Figure 5 is a schematic diagram of internal components of a detector being a second embodiment of the invention.

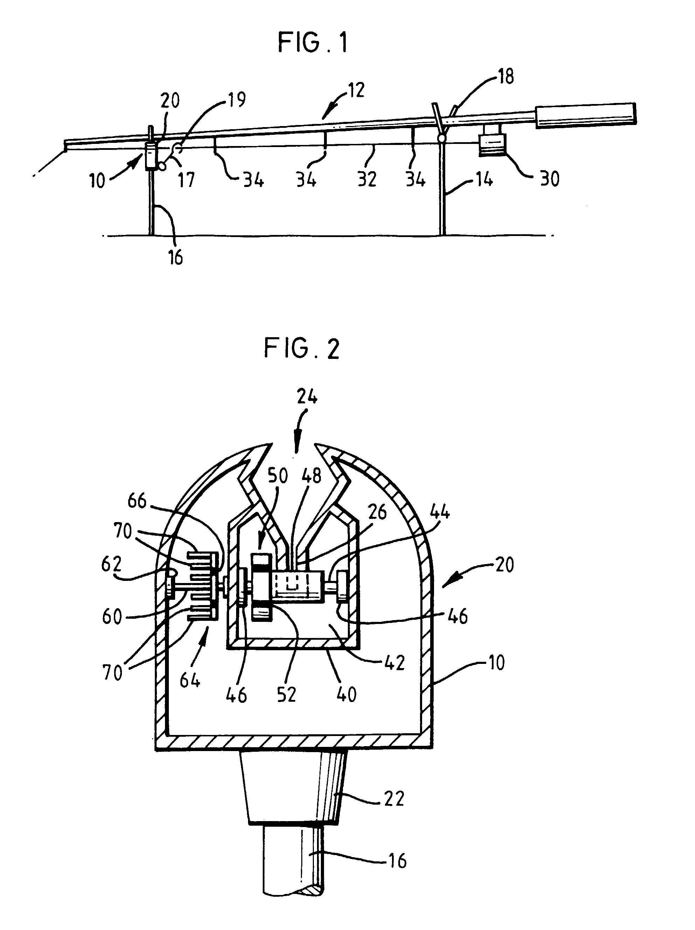

With reference to figure 1, a bite detector 10 is typically used in conjunction with a fishing rod 12 and a bankstick. The bankstick comprises a pair of vertical posts 14, 16. The first post 14 carries a generally V-shaped fixture 18 in which a part of the fishing rod 12 can rest securely. The second post 16 carries the bite detector 10.

The fishing rod 12 carries a reel 30 from which a line 32 extends along the length of the rod 12 to its tip, the path of the line 32 being determined by line guides 34 spaced along the rod 12. In use, the rod is disposed to such that the line 32 extends below the rod 12.

The bite detector 10 comprises a body 20 which has a fitting 22 by means of which it is connected to the bankstick 16. When so mounted, the detector 10 presents an upwardly-directed opening 24 of generally V-shaped section, with a slot 26 extending downwardly into the body 22 from it. By this arrangement, a part of the fishing rod 12 can rest in the opening 24, and the line 32 will enter the slot.

The bite detector 10 further comprises a line tensioner. The line tensioner comprises an arm 17 which is connected to the body 20 to be pivotable about a horizontal axis. At an end of the arm 17 remote from its pivotal attachement to the body 20, there is provided a hook formation 19. In use, the hook formation 19 is placed over the line 32 to engage the line at a position between the bite detector and the reel 30. Thus, the weight of the arm 17 is supported by the line 32, thereby maintaining tension in the line 32. Thus, a reduction in the tension of the line 32 between the bite detector 10 and the hook (as might be caused by a biting fish swiming towards the rod) will cause line to be pulled through the bite detector 10 under the action of the arm 17.

Within the body 20 there is an internal wall 40 which defines a chamber 42, the internal wall 42 forming a water impermeable barrier between the chamber 42 and the remainder of the body 20. The slot 26 extends downwardly through an upper wall of the chamber 42.

Within the chamber 42 there is supported a first spindle 44 for rotation about a horizontal axis. The first spindle 44 is carried on bearing 46 such that it can rotate with a minimum of friction. A roller 48 and a wheel 50 carried on the spindle for rotation with it. A plurality of permanent magnets 52 are disposed within the wheel 50, circumferentially spaced around it.

When in use, the line 32 makes contact with the roller 48, such that linear movement of the line 32 causes rotational movement of the roller 48, and consequently rotational movement of the first spindle 44 and the wheel 50.

Within the body 20, but not within the chamber 42, there is a sealed space in which environmentally sensitive operative components of the bite detector 10 are disposed. These will now be described.

A second spindle 60 is disposed coaxially with the first spindle 44, this being supported for free rotation on bearings 62. A rotor 64 is carried on the second spindle 60. The rotor 64 carries a plurality of magnets 66 each disposed to be attracted to a respective magnet 52 of the wheel 50. This magnetic attraction causes the rotor to rotate such that its rotation follows that of the wheel 50.

Also mounted on the rotor 64 is a plurality of vanes 70 of lightweight material which extend in a cantilevered manner from the rotor 64 generally parallel to and at a common radius from the second spindle 60. The vanes 70 are made of a light-reflecting material.

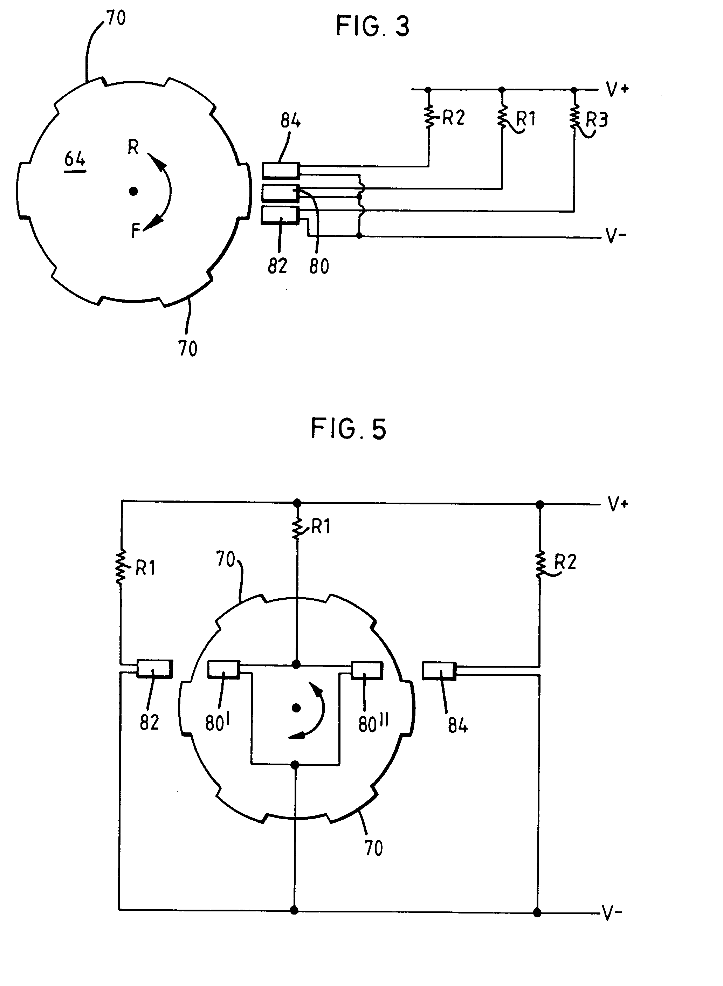

A detection assembly (shown schematically in Figure 3, but omitted from Figure 2) is mounted in the body 20 adjacent to the vanes 70. The detection assembly is operative to generate electrical signals responsive to movement of the vanes.

With reference to Figure 3, the detection assembly comprises an infra-red LED 80 disposed to direct infra-red radiation radially onto a vane 70 at such time as rotation of the rotor 64 brings the vane 70 close to the LED 80. A pair of infra-red detectors (each of which may comprise a phototransistor) 82, 84 is disposed such that each detector can gather light emitted by the LED 80 and subsequently reflected from one of the vanes 70.

The connection of the LED and the detectors is shown in simplified form in Fig 3. A more exact description will be given below.

The detectors 82, 84 are disposed on opposite sides of the LED 80, in a circumferential path centred upon the axis of the second spindle 60. Thus, if the rotor is turning anti-clockwise as shown in Figure 2, a vane will first pass in front of the first detector 82. Light from the LED will thus be reflected into the first detector 82, which will, in consequence, be activated. As rotation continues, the vane 70 will reach a median position in which reflected light from the LED 80 will reach both detectors 82, 84. Following this, light will cease to reach the first detector 82 and subsequently, both detectors 82, 84 will return to an inactive state.

It is therefore possible to establish speed and direction of rotation of the second spindle 60, and by inference, direction and speed of movement of the line 32, by monitoring output from the two detectors.

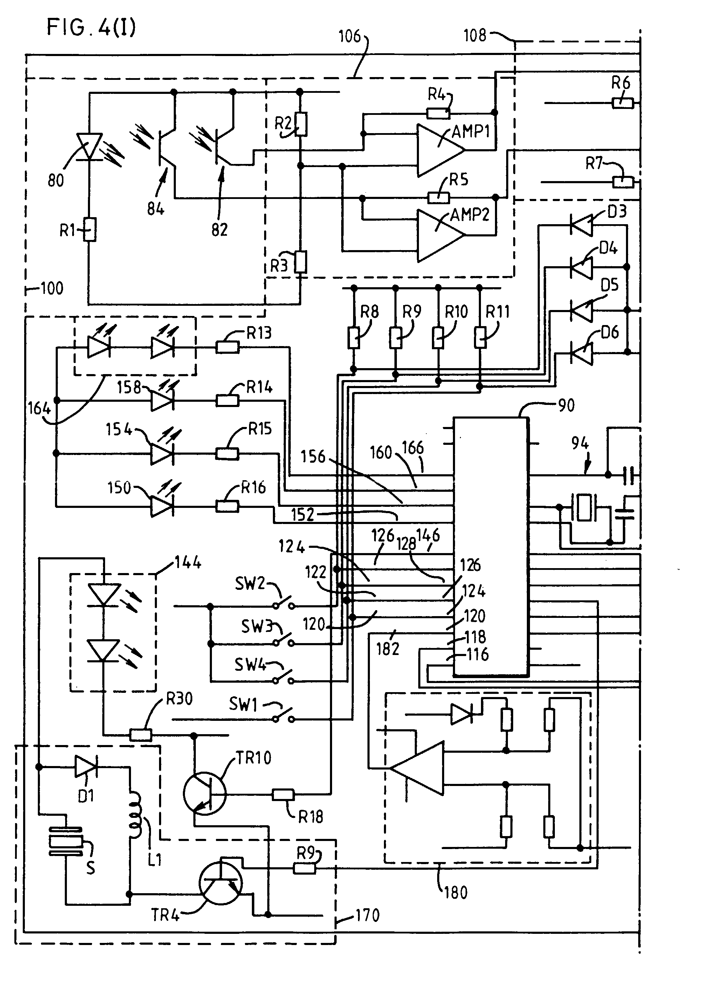

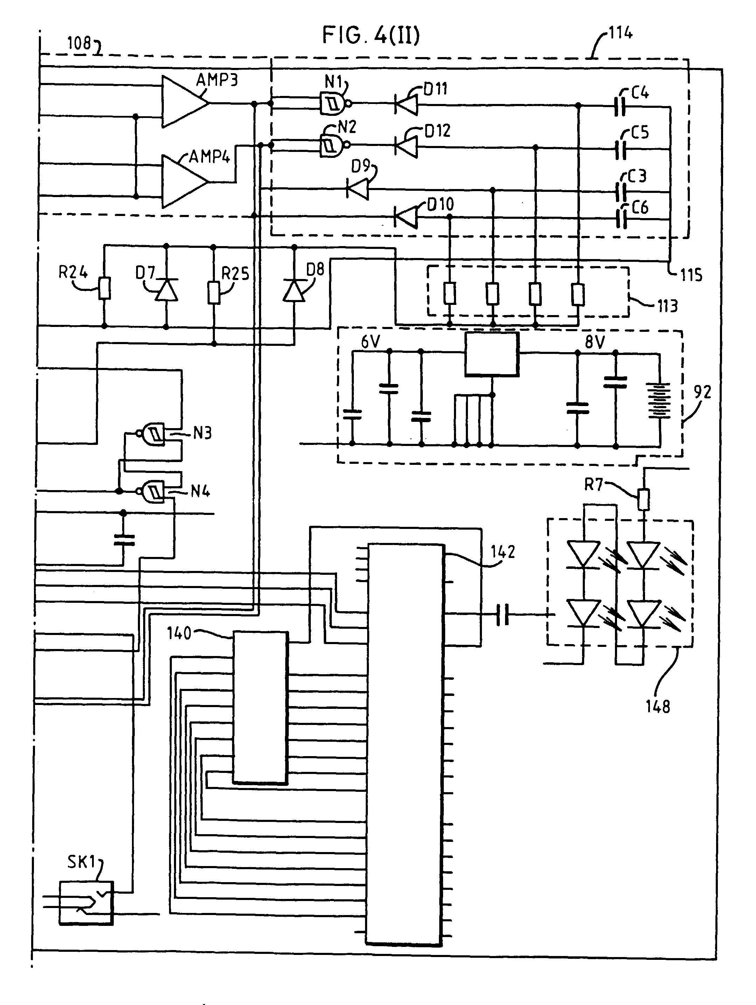

With reference to Figure 4, a control circuit for the fishing bite detector will now be described.

Operation of the control circuit is principally determined by a program-controlled microcontroller 90.

The circuit is provided with a 9V battery supply, a regulated 5V supply by a voltage regulator stage 92, a permanent 0V supply GND and a switched 0V supply SW_GND. The oscillator within the microcontroller 90 requires an external crystal. This is provided at 94. These circuit stages are of conventional form, and will not be described further.

The circuit diagram of Figure 4 includes a detector stage 100 which contains the LED 80 and detectors 82, 84 described above. The LED 80 is connected between the 5V supply line and the switched 0V supply SW_GND through a resistor R1. Each detector 82, 84 is connected with its collector connected to the 5V line and its emitter connected as a respective one of two outputs 102, 104 of the detector stage 100, each output thus corresponding to a respective detector 82, 84.

The outputs 102, 104 of the detection stage 100 are each amplified by a respective operational amplifier AMP1, AMP2 in a gain stage 106 to provide output signals of a known level. The outputs from the gain stage 106 are processed a normalisation stage 108, which comprises two buffer amplifiers AMP3, AMP4 to generate outputs at 110 and 112. The outputs at 110 and 112 have a sharply-defined square wave form, which are suitable inputs for the subsequent stages of the circuit, as will be described below.

The output signals of the normalisation stage 108 are fed to respective first and second data inputs 116, 118 of the microcontroller 90. Additionally, these signals are fed to respective inputs of an edge-detection stage 114 which generates on its output 115 a negative-going pulse each time there is a negative-going change in the level of either of its inputs (the signals being fed through the diodes D11, D12 and the capacitors C4, C5). Similarly, if a positive-going change appears on the input, this will be inverted by N1 or N2, as the case may be, and transmitted through the diode D11 or D2, and the capacitor C4 or C5 to the output of the edge-selection stage 115. Pull-up resistors 113 are provided to ensure that the capacitors C3, C6 are promptly discharged after each pulse.

Manual control of the device is effected through four normally-open push-button switches SW1 .. SW4. A first side of each switch is connected to 0V (permanent ground GND in the case of SW1 and switched ground SW_GND in the case of SW2 .. SW4). The other side of each of the switches is connected to a respective data input 120, 122, 124, 126 of the microcontroller 90, and through a respective pull-up resistor R11..R8 to a 5V supply rail.

The bite detector comprises several output devices connected to the microcontroller. These include a multi-character liquid crystal display (LCD) 140, which is connected to the microcontroller through a driver IC 142, which has an external capacitor C12. Both of these are conventional, and their operation will not be described in detail here. Backlighting for the LCD 140 is provided by four series-connected backlighting LEDs, shown generally at 144. The backlighting LEDs 144 are connected between the 9V supply rail and ground through a resistor R30 and a transistor TR10. The transistor TR10 is controlled by an LED control output 146 of the micorcontroller 90, to which the base of the transistor TR10 is connected through a resistor R18. A further four series-connected switch illumination LEDs 148 are connected in series with a resistor R7 between the 9V supply rail and the LED control input 146 of the microcontroller 90. Each of these LEDs is disposed adjacent to a respective one of the switches SW1..SW4 to enable ta user to locate them in darkness.

A green-coloured LED 150 is connected in series with a resistor R16 between the 5V supply rail and a first control output 152 of the microcontroller 90; an amber-coloured LED 154 is connected in series with a resistor R15 between the 5V supply rail and a second control output 156 of the microcontroller 90; and a red-coloured LED 158 is connected in series with a resistor R14 between the 5V supply rail and a control output 160 of the microcontroller 90. Two further series-connected LEDs 164 are connected in series with a resistor R13 between the 5V supply rail and a control output 166 of the microcontroller 90.

An audible output stage is provided at 170. This comprises a crystal sounder S which is connected between the 9V supply (in parallel with a diode D1 and an inductor L1) to the collector of a transistor TR4. The emitter of the transistor TR4 is connected to ground. The base of the transistor TR4 is connected through a resistor R9 to a fourth output 172 of the microcontroller 90. A square wave generated by the microcontroller on the fourth output 172 will cause an audible signal to be generated by the sounder S at the same frequency as the square wave. The microcontroller 90 can determine the volume of the tone produced by varying the on/off ratio of the square wave. A second square wave output is provided at 190. This is connected to a socket SK1 to which an external sounder can be connected, if required.

A battery level detection stage is provided at 180, which has an output connected to a battery level input line 182 of the microcontroller 90. This stage comprises an operational amplifier AMPS the inputs to which are fed from a pair of voltage divider networks connected between the 5V supply and ground. A first network is formed by two resistors R2 0, R22. The second network is formed by two resistors R19, R21 and a diode D2. When the battery voltage falls below a threshold, the diode D2 will drop out of conduction, and the voltage presented to the two inputs of the amplifier AMPS will diverge. This will change the output state of the amplifier, the change being detected by the microcontroller 90.

A flip-flop stage 200 has an input connected to the output 115 of the edge-detection stage 114 and also, through a respective diode D3..D6, to each of the switches SW1..SW4. An output of the flip-flop stage is fed to a status input of the microcontroller 90. In this manner, whenever an event occurs to which the microcontroller must react, the flip-flop stage 200 sends a signal to the microcontroller to ensure that it enters an operative mode. The microcontroller 90 is programmed such that the flip-flop stage 200 is reset after a predetermined period of time so returning the microcontroller 90 to a dormant state in which battery use is minimised.

The operation of the microcontroller's program will now be described.

Operation of any of the switches SW1 causes the microcontroller 90 to change from a standby state to an operative state. Subsequently, the microcontroller will stay in its operative state for a pre-programmed period or until it detects that the first of the switches SW1 has been operated.

The second switch SW2 operates as a mode selection switch which allows the user to configure certain operating characteristics of the bite detector. On detection of the operation of the switch SW2, the microcontroller 90 causes a message to be displayed on the LCD 140 to indicate to the user one of the conficgurable characteristics of the detector. Subsequent operations of the second switch SW2 causes successive configurable characteristics to be displayed in sequence.

The third and fourth switches SW3, SW4 are, respectively, increment and decrement controls. For example, if a user presses the second switch SW2 to select control of sensitivity to line movement, pressing the third switch will increase the sensitivity, while pressing the decrement control will decrease the sensitivity. During operation of the third and fourth switches, the microcontroller 90 will cause a representation of a bar graph to be displayed on the LCD 140 to indicate to the user the setting currently operative.

During normal operation, the microcontroller 90 awaits arrival of output signals from the normalisation stage 108 indicative that movement in the line 32 has occurred. A small amount of movement is ignored in order to avoid false alarms arising through, for example, wind disturbing the line 32. The amount of movement to be ignored can be selected by a user by adjusting the sensitivity of the detector, as discussed above.

In the event that the microcontroller 90 detects line movement, it causes a square wave pulse train to be generated on its fourth output for a brief period. This causes a short audible tone to be generated by the sounder S. The rate at which the tones are produced is proportional to the speed at which the line 32 is moving. At high speed, the tones may be generated so frequently as to be heard as a continuous uninterrupted tone. As a further alert, the volume of the tones may be increased as the line speed continues to rise.

Additionally, the microcontroller 90 is programmed to analyse the order in which changes occur in the state of the input lines 116, 118, and thereby to determine the direction in which the line 32 is moving. If the line 32 is being drawn away from the rod 12, the microcontroller causes the green-coloured LED 150 to flash. The flashing is maintained during movement of the line and for a predetermined time after movement ceases. If movement of the line 32 is towards the rod 12, the amber-coloured LED 154 is flashed instead.

Figure 5 shows an alternative arrangement for detecting movement of the rotor. In this arrangement, a pair of infra-red LEDs 80', 80" are disposed within the vanes 70 of the rotor 64 to radiate radially outwardly. Each LED 80', 80" is directed towards a respective detector 82, 84 disposed radially outwardly of the vanes 70, and directed inwardly. Thus, as the rotor 64 turns, the vanes 70 successively allow passage of radiation between the LEDs 80', 80" and the detectors 82, 84, thus allowing the microcontroller 90 to determine movement of the rotor 64 in a manner similar to that used in the first embodiment, described above.

## Claims

1. A fishing bite detector comprising a movement detector for detecting movement of a fishing line (32), which line extends between a reel (30) and a hook, and an indicator (150,158,S) for indicating such movement to a user,
the bite detector having a tensioner (17) to act on the line between the movement detector and the reel (30), the tensioner (17) operating to draw line through the movement detector in the event that tension in the line between the movement detector (10) and the hook is reduced,
characterised in that the indicator (150,158,S) gives a first signal in the event that the line (30) moves in a first direction and a distinct second signal in the event that the line (30) moves in the opposite direction.

2. A fishing bite detector according to claim 1 in which the tensioner comprises a weighted arm (17) which is supported by the line (32) between the movement detector and the reel (30).

3. A fishing bite detector according to claim 2 in which the arm (17) is pivotally attached to a body (20) of the bite detector.

4. A fishing bite detector according to any preceding claim in which the indicator (150,158) serves to indicate detection of line movement by emission of light.

5. A fishing bite detector according to claim 4 in which direction of movement is indicated by which one of a plurality of colours of light is emitted by the indicator.

6. A fishing bite detector according to claim 4 or claim 5 in which the direction of movement is indicated by which one of a plurality of patterns of light is displayed.

7. A fishing bite detector according to any preceding claim in which the indicator (S) serves to indicate line movement by emission of sound.

8. A fishing bite detector according to claim 7 in which the direction of movement of the line indicated by emission of one of a plurality of distinguishable sounds.

9. A fishing bite detector according to any preceding claim in which movement of the line (30) causes rotary movement of a first rotor (48) of the movement detector.

10. A fishing bite detector according to claim 9 in which rotary movement of the first rotor (48) is transmitted to a second rotor (64) through an impermeable membrane (40), the membrane being disposed to provide a sealed housing for electronic components of the detector.

11. A fishing bite detector according to claim 10 in which each rotor (48,64) carries permanent magnets (52,66), rotary movement being transmitted through attractive or repulsive forces acting between the magnets (52,66).
